# EUROPÄISCHE PATENTSCHRIFT

(11) **EP 2 271 541 B1**
(45) Veröffentlichungstag und Bekanntmachung des Hinweises auf die Patenterteilung: **02.09.2015**
(21) Anmeldenummer: 09741997.2
(22) Anmeldetag: 27.04.2009
(51) Int. Cl.: B62D 29/00, B32B 15/01

(54) **VERWENDUNG EINES METALLISCHEN VERBUNDWERKSTOFFS IN EINER FAHRZEUGSTRUKTUR**
USE OF A METAL COMPOSITE MATERIAL IN A VEHICLE STRUCTURE
UTILISATION D'UN MATÉRIAU COMPOSITE MÉTALLIQUE DANS UNE STRUCTURE DE VÉHICULE

(30) Priorität: 07.05.2008 DE 102008022709
(43) Veröffentlichungstag der Anmeldung: 12.01.2011
(73) Patentinhaber: ThyssenKrupp Steel Europe AG, 47166 Duisburg (DE)
(72) Erfinder: BECKER, Jens-Ulrik, 47058 Duisburg (DE); PATBERG, Lothar, 47445 Moers (DE); SEYFRIED, Peter, 10439 Berlin (DE); TAMLER, Horst Walter, 58453 Witten (DE); WUNDERLICH, Roland, 59192 Bergkamen (DE)
(74) Vertreter: Cohausz & Florack
(86) Internationale Anmeldenummer: PCT/EP2009/055053
(87) Internationale Veröffentlichungsnummer: WO 2009/135779

(56) Entgegenhaltungen:
- EP-A- 0 596 133
- EP-A- 1 060 874
- JP-A- H03 133 630

## Beschreibung

Die Erfindung betrifft die Verwendung eines mehrlagigen, mittels Walzplattieren hergestellten, haspelbaren, metallischen Verbundwerkstoffs in einer Fahrzeugstruktur, insbesondere Karosseriestruktur.

Werkstoffe, welche in Fahrzeugstrukturen, insbesondere Karosseriestrukturen Anwendung finden, werden üblicherweise mit Eigenschaften ausgebildet, welche sich aus den an die Werkstoffe gestellten Anforderungen ergeben. Außenhautteile eines Fahrzeugs beispielsweise sollen eine hohe Festigkeit aufweisen, um die Integrität einer Karosserie auch bei Belastungen zu gewährleisten. Gleichzeitig sollen die Außenhautteile aber auch eine gute Beschichtbarkeit aufweisen, um beispielsweise als Träger eines Lacks fungieren zu können. Weiterhin muss der Werkstoff der Außenhautteile ein gutes Umformverhalten aufweisen, um die gegebenenfalls komplexen geometrischen Strukturen der Außenhautteile ohne Beeinträchtigung ausbilden zu können. Eine optimale Realisierung aller Anforderungen in einem monolithischen Werkstoff ist nach heutigem Stand der Technik nicht erreichbar. Verbundwerkstoffe hingegen sind dazu geeignet, durch eine geeignete Zusammenstellung von Werkstoffen mit unterschiedlichen Eigenschaften mehrere Funktionen gleichzeitig zu erfüllen, und damit die zuvor genannten Nachteile zumindest abzumildern.

Aus der gattungsgemäßen EP 0 596 133 A1 ist ein Verbundwerkstoff bestehend aus Stählen mit unterschiedlichen Legierungszusammensetzungen bekannt, deren Legierungszusammensetzung in Bezug auf die Vermeidung von Diffusion von Kohlenstoff bei Wärmebehandlungen optimiert ist.

Die europäische Patentanmeldung EP 1 060 874 A1 offenbart dazu eine Mehrschichtverbundplatte mit Lochblechzwischenlage zur Optimierung der Steifigkeit, Korrosionsschutz sowie Schwingungs- und Schalldämpfung.

Schließlich ist aus der japanischen Patentanmeldung JP-H03-13363017 ein Stahlverbundwerkstoff mit einer äußeren Schicht mit Zugfestigkeiten von bis zu ca. 550 MPa bekannt.

Der Erfindung liegt daher die Aufgabe zu Grunde, eine Verwendung eines metallischen Verbundwerkstoffs als Alternative zu monolithischen Werkstoffen anzugeben.

Gemäß der Lehre der vorliegenden Erfindung wird die Aufgabe durch die Verwendung eines Verbundwerkstoffs mit den Merkmalen des Patentanspruches 1 gelöst.

Es wurde erkannt, dass durch eine gezielte Ausgestaltung des Verbundwerkstoffs, insbesondere durch die Wahl und Zusammenstellung bestimmter Stahlgüten wie weicher, gut umformbarer Stahllegierungen oder höherfester bzw. höchstfester Stahllegierungen eine maßgeschneiderte Verbesserung der technischen Eigenschaften des Verbundwerkstoffs, welcher für die Verwendung in Fahrzeugstrukturen, insbesondere Karosseriestrukturen und Anbauteilen vorgesehen ist, beispielsweise hinsichtlich der Erzielung einer Leichtbauweise im Vergleich zu konventionellen Werkstoffen erreicht werden kann. Der Verbundwerkstoff wird erfindungsgemäß warmumgeformt.

Beispielsweise ist die mittlere Lage in einem dreilagigen Verbund aus einer weichen, gut umformbaren Stahllegierung und wenigstens eine der äußeren Lagen aus einer höherfesten oder höchstfesten Stahllegierung gefertigt. Auf diese Weise können beispielsweise während des Betriebs eines aus dem Verbundwerkstoff gefertigten Bauteils auftretende, insbesondere mechanische Belastungen von einer äußeren Lage, welche werkstofftechnisch an derartige Beanspruchungen angepasst ist, aufgefangen werden.

Eine weiche, gut umformbare Stahllegierung zeichnet sich beispielsweise dadurch aus, dass die Streckgrenze unterhalb von 300 MPa liegt und gleichzeitig die Bruchdehnung A₈₀ mehr als 20% beträgt. Als Beispiel für eine weiche, gut umformbare Stahllegierung kann eine Stahllegierung des Typs DC03 mit einer Streckgrenze von 160 MPa und einer Bruchdehnung A₈₀ von mehr als 50% angesehen werden. Als höherfeste bzw. höchstfeste Stahllegierungen werden Stahllegierungen mit einer Streckgrenze von mehr als 300 MPa angesehen, deren Bruchdehnung A₈₀ weniger als 35% beträgt. Als Beispiel einer höchstfesten Stahllegierung ist beispielsweise ein Martensitphasenstahl nach der Norm prEN 10336 HDT1200M mit einer Streckgrenze von etwa 900 MPa und einer Bruchdehnung von ca. 5% zu nennen.

In einer vorteilhaften Ausgestaltung der Erfindung sind alle drei Lagen aus voneinander abweichenden Stahllegierungen gefertigt. Auf diese Weise kann werkstofftechnisch ein hinsichtlich der mittleren Lage asymmetrischer Verbundwerkstoff zur Verfügung gestellt werden. Es ist denkbar, den Verbundwerkstoff an Belastungen anzupassen, welche auf die unterschiedlichen Seiten in unterschiedlicher Stärke einwirken. Es ist auch möglich, eine der äußeren Lagen aus einer Stahllegierung zu fertigen, welche eine besonders vorteilhafte Schweißbarkeit aufweist, beispielsweise wenn die entsprechende Seite für die Schweißverbindung mit einer anderen Komponente vorgesehen ist.

Weiterhin können die beiden äußeren Lagen aus der gleichen höherfesten oder höchstfesten Stahllegierung bestehen. In diesem speziellen Beispiel kann ein werkstofftechnisch hinsichtlich der mittleren Lage symmetrischer Verbundwerkstoff gefertigt werden. Dadurch weist der Verbundwerkstoff hinsichtlich der Werkstoffeigenschaften keine Vorzugsrichtung auf und ist besonders vielseitig einsetzbar. Insbesondere verhält sich der derartig symmetrisch ausgebildete Verbundwerkstoff bei Umformvorgängen wie ein einlagiges Blech. Damit ist der Verbundwerkstoff Vorrichtungen und Verarbeitungsschritten zugänglich, wie sie für einlagige Bleche Verwendung finden.

Ferner kann der Verbundwerkstoff einseitig oder beidseitig eine metallische und/oder organische Beschichtung aufweisen. Mittels einer Beschichtung können dem Verbundwerkstoff weitere Eigenschaften, beispielsweise eine höhere Korrosionsresistenz oder ein gefälliges ästhetisches Äußeres verliehen werden. Beispielsweise kann der Verbundwerkstoff feuerverzinkt oder eloverzinkt sein. Es sind aber zusätzlich oder alternativ auch aluminiumbasierte Beschichtungen sowie Lackbeschichtungen denkbar.

In einer weiteren vorteilhaften Ausgestaltung ist der Verbundwerkstoff vorzugsweise kalt und warm umgeformt. Auf diese Weise lässt sich der Verbundwerkstoff zu Bauteilen formen, wie sie in einer Fahrzeugstruktur, insbesondere Karosseriestruktur verwendet werden. Der Art der Umformtechnik oder der Form der Bauteile sind grundsätzlich keine Grenzen gesetzt.

Weiterhin sollte die Dicke der mittleren Lage bevorzugt höchstens 90%, vorzugsweise aber mindestens 30% der Gesamtdicke des Verbundwerkstoffs betragen. Da für eine mittlere Lage beispielsweise aus einer weichen, gut umformbaren Stahllegierung im Gegensatz zu äußeren Lagen aus höherfesten bzw. höchstfesten Stahllegierungen kostengünstige Stahllegierungen verwendet werden können, lassen sich durch die Vorgabe einer Mindestdicke der mittleren Lage im Verhältnis zur Gesamtdicke des Verbundwerkstoffs Kosteneinsparungen erreichen. Um jedoch eine gute Umformbarkeit und gleichzeitig eine gute Festigkeit gewährleisten zu können, soll vorzugsweise die Dicke der mittleren Lage 80% der Gesamtdicke des Verbundwerkstoffs nicht überschreiten. Die Festigkeitswerte können durch die Wahl der Dicke der Lagen aus einer höherfesten bzw. höchstfesten Stahllegierung im Verhältnis zu den anderen Lagen eingestellt werden.

Insbesondere ist es bevorzugt, dass die Gesamtdicke des Verbundwerkstoffs höchstens 10,0 mm beträgt, vorzugsweise im Bereich von 0,5 mm bis 4,0 mm liegt. Je nach den Anforderungen an die Umformbarkeit und an die Festigkeit kann mit dem Verbundwerkstoff eine deutliche Gewichtsreduktion erzielt werden, ohne Einbußen hinsichtlich der gewünschten Festigkeits- oder Umformungseigenschaften hinnehmen zu müssen. Der Verbundwerkstoff kann daher vorzugsweise als Leichtbauverbundwerkstoff zur Anwendung kommen.

Eine vorteilhafte Ausgestaltung der Erfindung besteht darin, dass die Dicken von wenigstens zwei Lagen, insbesondere den äußeren Lagen übereinstimmen. Auf diese Weise kann ein hinsichtlich der Dicken der einzelnen Lagen symmetrischer Aufbau des Verbundwerkstoffs umgesetzt werden. Besonders ausgeprägt ist diese Symmetrie, wenn die äußeren Lagen darüber hinaus auch noch aus der gleichen Stahllegierung, beispielsweise höherfesten bzw. höchstfesten Stahllegierung gefertigt sind. Die Einstellung einer bestimmten Dicke der äußeren Lagen kann beispielsweise die Belastbarkeit der entsprechenden Seite des Verbundwerkstoffs oder gegebenenfalls auch die Weiterverarbeitbarkeit, beispielsweise ein Verschweißen des Verbundwerkstoffs an der entsprechenden Seite beeinflussen.

Besonders bevorzugt ist es, wenn die Verwendung für eine B-Säule, Strukturbauteile im Kraftfluss, Knotenbleche, Sitzschienen, Schlösser, Scharniere, Führungen, korrosionsgefährdete Bauteile mit hohen Festigkeitsanforderungen wie Fahrwerke, Tanks, Crashboxen, Längsträger, Bremsscheiben oder Kupplungen erfolgt. In diesen Anwendungsgebieten lassen sich die flexibel einstellbaren bzw. kombinierbaren Eigenschaften des Verbundwerkstoffs besonders vorteilhaft einsetzen. So werden insbesondere durch äußere Lagen aus einer höherfesten bzw. höchstfesten Stahllegierung die Festigkeitswerte und Umformungseigenschaften des Verbundwerkstoffs weitgehend bestimmt, wohingegen eine mittlere Lage aus einer weichen, gut umformbaren Stahllegierung insbesondere zur Gewichts- und/oder Kostenreduktion beiträgt.

Es gibt vielfältige Möglichkeiten, den mehrlagigen Verbundwerkstoff auszugestalten und weiterzubilden. Hierzu wird einerseits auf die von dem unabhängigen Patentanspruch 1 abhängigen Patentansprüche und andererseits auf Ausführungsbeispiele in Verbindung mit der Zeichnung verwiesen. In der Zeichnung zeigt:
- Fig. 1: in einer Querschnittsansicht einen dreilagigen, haspelbaren, metallischen Verbundwerkstoff und
- Fig. 2a-c: mehrere Eigenschaftsdiagramme bestimmter Stahlwerkstoffe.

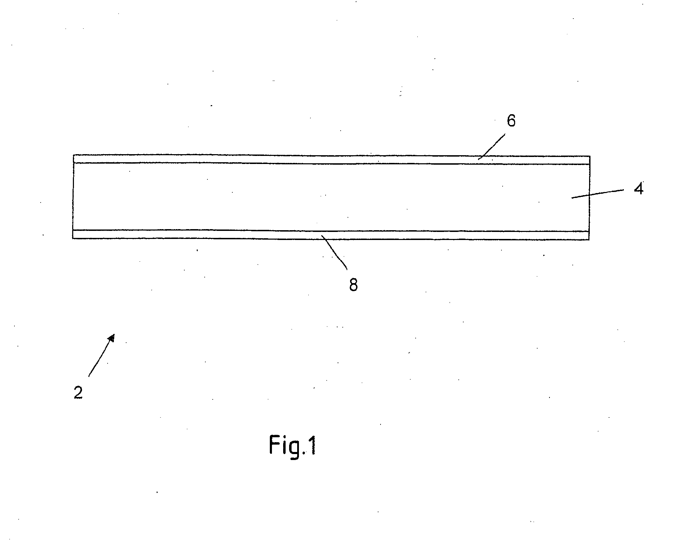

Fig. 1 zeigt eine Querschnittsansicht eines beispielhaften, dreilagigen Verbundwerkstoffs 2. Er besteht in diesem Beispiel aus einer mittleren Lage 4 aus einer weichen, gut umformbaren Stahllegierung und zwei äußeren Lagen 6, 8 aus einer höherfesten bzw. höchstfesten Stahllegierung. Die beiden äußeren Lagen 6, 8 können aus der gleichen Stahllegierung gefertigt sein. Es ist aber auch möglich, die äußeren Lagen 6, 8 aus voneinander abweichenden Stahllegierungen zu fertigen, beispielsweise wenn der Belastungsgrad der verschiedenen Seiten bei der Verwendung des Verbundwerkstoffs 2 unterschiedlich ist. Die Dicken der beiden äußeren Lagen 6, 8 sind in diesem Beispiel in etwa identisch. Es ist aber ebenso möglich, die Dicken der drei Lagen 4, 6, 8 zueinander zu variieren. Der Verbundwerkstoff 2 kann ferner einseitig oder beidseitig eine metallische und/oder organische Beschichtung (nicht gezeigt) aufweisen. Möglich ist beispielsweise eine aluminiumbasierte Beschichtung oder Lackbeschichtung. Aber auch eine Feuer- oder Eloverzinkung ist denkbar. Der Verbundwerkstoff 2 kann bevorzugter Weise für eine B-Säule, Strukturbauteile im Kraftfluss, Knotenbleche, Sitzschienen, Schlösser, Scharniere, Führungen, korrosionsgefährdete Bauteile mit hohen Festigkeitsanforderungen wie Fahrwerke, Tanks, Crashboxen, Längsträger, Bremsscheiben oder Kupplungen verwendet werden.

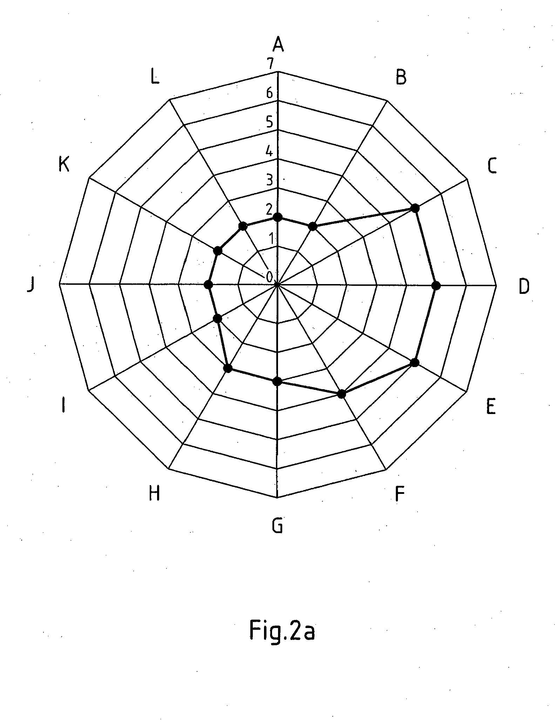

In den Eigenschaftsdiagrämmen, welche in den Fig. 2a-c gezeigt sind, ist dargestellt, wie die Eigenschaften einzelner Stahlwerkstoffe in Kombination mit anderen Stahlwerkstoffen zu den Eigenschaften eines Stahlverbundwerkstoffs geändert werden. Die Ausprägungsgrade werden in Stufen von "0" bis "7" angegeben. "0" bedeutet im Wesentlichen, dass die Eigenschaft kaum vorhanden ist. "7" hingegen bedeutet, dass die Eigenschaft sehr stark ausgeprägt ist. In den Diagrammen sind zwölf Eigenschaften mit Großbuchstaben repräsentiert. Die Buchstaben stehen für
A: Oberflächenqualität,
B: Fügeeignung,
C: Energieumwandlungsvermögen bei großen Deformationen,
D: Energieumwandlungsvermögen bei kleinen Deformationen,
E: Kerbempfindlichkeit,
F: Neigung zu wasserstoffinduzierter Rissbildung,
G: Umformvermögen,
H: Duktilität,
I: Reibungsminderung,
J: Korrosionsschutzverbesserung,
K: Medienbeständigkeit,
L: Wärmewiderstand.

In dem in Fig. 2a gezeigten Eigenschaftsdiagramm werden beispielsweise die Eigenschaften eines ersten Stahlwerkstoffs, welcher der Gruppe der höherfesten bzw. höchstfesten Stahllegierungen entnommen ist, dargestellt. Es.ist ersichtlich, dass die Fügeeignung und das Umformvermögen schwach sind. Das Energieumwandlungsvermögen bei großen bzw. kleinen Deformationen ist stark ausgeprägt. Die Eigenschaften Duktilität, Kerbempfindlichkeit, Neigung zu wasserstoffinduzierter Rissebildung, Reibungsminderung, Korrosionsschutzverbesserung, Medienbeständigkeit, Wärmewiderstand und Oberflächenqualität sind hingegen eher schwach ausgeprägt.

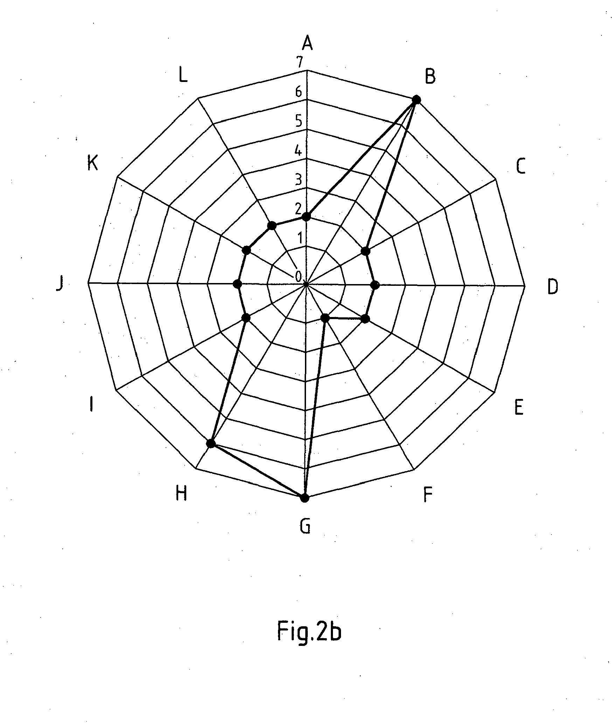

In dem in Fig. 2b gezeigten Eigenschaftsdiagramm werden die Eigenschaften eines zweiten Stahlwerkstoffs, welcher der Gruppe der weichen, gut umformbaren Stahllegierungen entnommen ist, dargestellt. Es ist ersichtlich, dass die Fügeeignung sowie das Umformvermögen und die Duktilität sehr stark ausgeprägt sind. Die Eigenschaften Energieumwandlungsvermögen bei großen bzw. kleinen Deformationen, Kerbempfindlichkeit, Neigung zu wasserstoffinduzierter Rissbildung, Reibungsminderung, Korrosionsschutzverbesserung, Medienbeständigkeit, Wärmewiderstand sowie Oberflächenqualität sind dagegen schwach oder sehr schwach ausgeprägt.

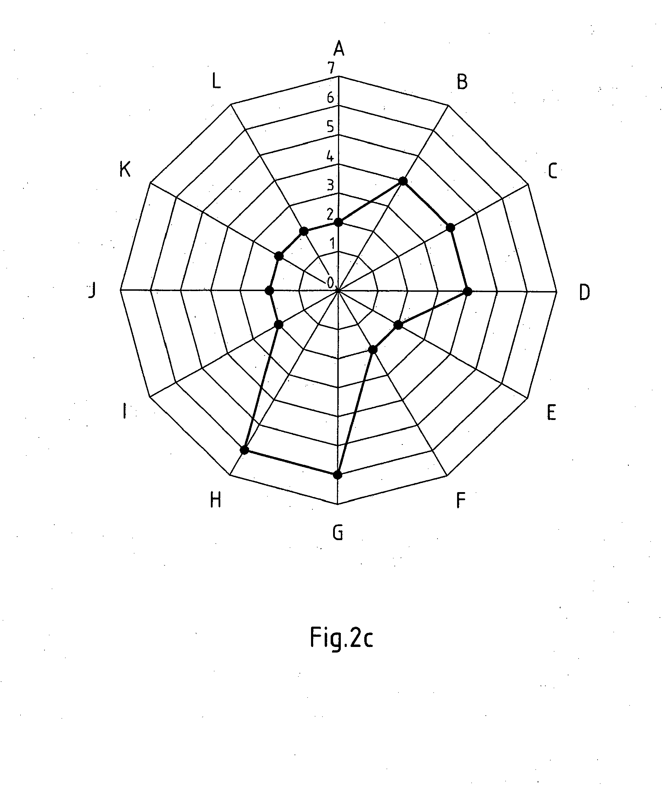

Durch die Herstellung eines Verbundwerkstoffs lassen sich die unterschiedlich ausgeprägten Eigenschaften der in den Fig. 2a und 2b aufgezeigten Stahllegierungen miteinander kombinieren bzw. ergänzen, so dass für einen derartigen Verbundwerkstoff ein neues Eigenschaftsdiagramm entsteht, welches in Fig. 2c gezeigt ist. Der Verbundwerkstoff kann beispielsweise zwei äußere Lagen aus der aus der Fig. 2a bekannten, höherfesten bzw. höchstfesten Stahllegierung und eine mittlere Lage aus einer aus der Fig. 2b bekannten, weichen, gut umformbaren Stahllegierung aufweisen. Wie aus dem Diagramm ersichtlich sind die Duktilität und das Umformvermögen des Verbundwerkstoffs sehr stark ausgeprägt. Auch für das Energieumwandlungsvermögen bei großen bzw. kleinen Deformationen sowie der Fügeeignung ergeben sich moderat hohe Werte. Die restlichen Eigenschaften bleiben schwach ausgeprägt. Dies ist lediglich ein Beispiel dafür, wie durch eine Kombination von Stahllegierungen mit unterschiedlichen Eigenschaften ein Verbundwerkstoff geschaffen werden kann, welcher an die spätere Verwendung des Verbundwerkstoffs angepasste Eigenschaften aufweist. Durch das hohe und gegebenenfalls variable Anspruchsprofil sind derartige Verbundwerkstoffe zur Verwendung in einer Fahrzeugstruktur, insbesondere Karosseriestruktur besonders geeignet.

Für die Ausgestaltung einer B-Säule oder vergleichbarer stabilisierender Karosserieelemente sollten die Duktilität und das Umformvermögen bei der Stahllegierung wenigstens einer der Lagen deutlich erhöht sein. Dies kann durch eine Kombination einer mikrolegierten Stahllegierung, beispielsweise des Typs H340 LAD als Material der beiden äußeren Lagen und einem Borstahl des Typs 22MnB5 als Material der mittleren Lage erzielt werden. Es ist aber ebenfalls eine umgekehrte Anordnung, d.h. 22MnB5 außen und H340 LAD innen, vorstellbar. Die Dicke der äußeren Lagen beträgt beispielsweise übereinstimmend je 20% der Gesamtdicke, wohingegen die Dicke der mittleren Lage 60% der Gesamtdicke ausmacht. Die Gesamtdicke des Verbundwerkstoffs beträgt in diesem Beispiel 2 mm. Durch diese Kombination kann eine hohe Festigkeit und eine hohe Duktilität des Verbundwerkstoffs gewährleistet werden. Darüber hinaus ist ein derartiger Verbundwerkstoff für Fügeprozesse im Rohbau besonders geeignet. Vorzugsweise wird ein derartiger Verbundwerkstoff warm umgeformt.

Es ist jedoch alternativ auch möglich, einen Borstahl des Typs 22MnB5 als Material der äußeren Lagen mit einem Stahl aus der Gruppe der hochfesten, hochduktilen Werkstoffe, z.B. FeMn-Stähle (mit 8 bis 30 Gew.-% Mangan, 0 bis 1 Gew.-% Kohlenstoff, 0 bis 12 Gew.-% Aluminium, 0 bis 10 Gew.-% Silizium, 0 bis 10 Gew.-% Chrom, 0 bis 0,5 Gew.-% einzeln oder gemeinsam Vanadium, Titan, Niob, Bor; Rest Eisen und Verunreinigungen) als Material der mittleren Lage zu kombinieren. Es ist aber ebenfalls eine umgekehrte Anordnung, d.h. 22MnB5 innen und hochfester, hochduktiler Stahlwerkstoff außen, vorstellbar. Die äußeren Lagen können einen Dickenanteil von 30% aufweisen, wohingegen die Dicke der mittleren Lage etwa 40% beträgt. Die Verarbeitung des Verbundwerkstoffs mittels einer Warmumformung ist besonders bevorzugt. Mit dieser Stahllegierungskombination kann eine sehr hohe Festigkeit und eine deutlich erhöhte Duktilität erreicht werden.

Für die Ausgestaltung von Strukturbauteilen im Kraftfluss oder Knotenbleche sollte die Fügeeignung bei der Stahllegierung oder den Stahllegierungen der äußeren Lagen ein höheres Niveau aufweisen. Insbesondere ist die Kombination von höchstfesten, kaltumformbaren Stahllegierungen mit weichen, duktilen Stahllegierungen zur Verarbeitung in der Kaltumformung für komplexe Geometrien geeignet. Als Beispiel für einen entsprechenden Lagenaufbau sei eine äußere Lage aus einer DC04-Stahllegierung, eine mittlere Lage aus einer Complex-Phasen-Stahllegierung des Typs CP-W und einer weiteren äußeren Lage aus einer DC04-Stahllegierung genannt. Es ist aber ebenfalls eine umgekehrte Anordnung, d.h. CP-W außen und DC04 innen, vorstellbar. Die Dicken der äußeren Lagen können je 25% der Gesamtdicke betragen. Die Dicke der mittleren Lage macht in diesem Beispiel etwa 50% der Gesamtdicke des Verbundwerkstoffs aus. Durch diese Kombination wird ein optimales Umformverhalten, insbesondere bei sehr komplexen Bauteilen erreicht. Die Festigkeit des Verbundwerkstoffs kann dabei etwa 500 MPa betragen. Der Verbundwerkstoff weist eine hohe Duktilität und eine gute Betriebsfestigkeit auf, und ist ferner für Fügeprozesse besonders geeignet.

Für die Ausgestaltung von Sitzschienen, Scharnieren oder Führungen sollte das Verschleißverhalten der Stahllegierungen, insbesondere der äußeren Lagen deutlich erhöht sein. Um einen Verbundwerkstoff mit vorteilhaften Reibungseigenschaften zu erhalten, wie er insbesondere für die Anwendung in Sitzschienen, Scharnieren oder Führungen erforderlich ist, ist eine Kombination eines mittelfesten Werkstoffs als Material der mittleren Lage mit einem extrem harten (hochfesten) Werkstoff als Material der äußeren Lage, welcher an den Oberflächen, insbesondere im Mischreibungsgebiet einen reduzierten Reibungswiderstand aufweist, bevorzugt. Die äußeren Lagen können eine Dicke von je 10% der Gesamtdicke, die mittlere Lage von 80% der Gesamtdicke aufweisen. Die Stahllegierungen werden vorzugsweise so gewählt, dass im Verbundwerkstoff eine hohe Festigkeit und hohe Duktilität insbesondere im Kern sowie eine verminderte Oberflächenreibung im Mischreibungsgebiet erreicht werden. Ferner ist es möglich, als Material der mittleren Lage eine duktile Stahllegierung und als Material der äußeren Lagen eine Stahllegierung, welche eine hohe Verschleißfestigkeit aufweist, zu wählen. Auf diese Weise kann eine erhöhte Verschleißfestigkeit erzielt werden. Weiterhin ist es dadurch möglich, die bei Reibungen entstehenden Geräuschniveaus gering zu halten.

Für die Ausgestaltung von korrosionsgefährdeten Bauteilen mit hohen Festigkeitsanforderungen wie Fahrwerke oder Tanks sollte das Korrosionsverhalten der Stahllegierungen aller Lagen ein deutlich höheres Niveau aufweisen. Eine Kombination von höchstfesten, kaltumformbaren Stahllegierungen mit FeMn-Stählen in der Kaltumformung für komplexe Geometrien kann beispielsweise durch zwei äußere Lagen aus einem Ferrit-Bainit-Phasenstahl des Typs FB-W 600 und einer mittleren Lage aus einem FeMn-Stahl, wobei die Dicke der äußeren Lagen übereinstimmend 30% der Gesamtdicke beträgt, erzielt werden. Auf diese Weise kann ein sehr gutes Umformverhalten erzielt werden, was insbesondere für die Ausbildung sehr komplexer Bauteilgeometrien von Vorteil ist. Durch die Kombination eines FeMn-Stahls mit einer Stahllegierung vom Typ FB-W 600 lassen sich vergleichsweise hohe Festigkeiten um die 700 MPa erreichen. Ein derartiger Verbundwerkstoff zeichnet sich darüber hinaus durch seine hohe Duktilität, gute Betriebsfestigkeit, reduzierte Kerbempfindlichkeit, die material- und fertigungsbedingt verringerten Kosten und die gute Fügeeignung aus.

Für die Ausgestaltung von Crashboxen oder Längsträger sollte die Energieabsorption bei der Stahllegierung oder den Stahllegierungen aller Lagen deutlich erhöht sein.

Für die Ausgestaltung von Bremsscheiben oder Kupplungen sollten das Umformvermögen und die Warmfestigkeit bei der Stahllegierung oder den Stahllegierungen aller Lagen deutlich erhöht sein. Ferner kann es vorteilhaft sein, wenn die Beschichtbarkeit und die Oberflächeneigenschaften der Stahllegierungen der äußeren Lagen stärker ausgeprägt sind.

In den zuvor aufgeführten Beispielen waren die Dicken der äußeren Lagen jeweils gleich. Dies ist jedoch nicht zwingend. Es kann beispielsweise vorteilhaft sein, eine äußere Lage zum Zwecke der Prozesssicherheit mit einer im Vergleich zu der zweiten äußeren Lage größeren Dicke zu versehen, beispielsweise wenn diese dickere äußere Lage im Zuge der weiteren Verarbeitung Schweißprozessen unterzogen wird. Ferner liegt die Gesamtdicke der Verbundwerkstoffe in den obigen Beispielen vorzugsweise zwischen 0,8 mm und 2,5 mm. Es ist aber auch möglich, eine niedrigere Gesamtdicke wie 0,5 mm oder eine höhere Gesamtdicke wie 10,0 mm zu wählen.

## Patentansprüche

1. Verwendung eines mehrlagigen, mittels Walzplattieren hergestellten, haspelbaren, metallischen Verbundwerkstoffs in einer Fahrzeugstruktur, insbesondere Karosseriestruktur,
**dadurch gekennzeichnet, dass** der Verbundwerkstoff ein Leichtbauverbundwerkstoff ist und drei Lagen aus einer Stahllegierung aufweist, wobei wenigstens eine der Lagen aus einer höherfesten oder höchstfesten Stahllegierung gefertigt ist, welche eine Streckgrenze von mehr als 300 MPa und eine Bruchdehnung A₈₀ von weniger als 35% aufweist und der Verbundwerkstoff warmumgeformt ist.

2. Verwendung nach Anspruch 1,
**dadurch gekennzeichnet, dass** die mittlere Lage aus einer weichen, gut umformbaren Stahllegierung, welche eine Streckgrenze von weniger als 300 MPa und eine Bruchdehnung A₈₀ von mehr als 20% aufweist und wenigstens eine der äußeren Lagen aus einer höherfesten oder höchstfesten Stahllegierung, welche eine Streckgrenze von mehr als 300 MPa und eine Bruchdehnung A₈₀ von weniger als 35% aufweist gefertigt sind.

3. Verwendung nach Anspruch 1 oder 2,
**dadurch gekennzeichnet, dass** alle drei Lagen aus voneinander abweichenden Stahllegierungen gefertigt sind.

4. Verwendung nach Anspruch 1 oder 2,
**dadurch gekennzeichnet, dass** die beiden äußeren Lagen aus der gleichen höherfesten oder höchstfesten Stahllegierung bestehen.

5. Verwendung nach einem der Ansprüche 1 bis 4,
**dadurch gekennzeichnet, dass** der Verbundwerkstoff einseitig oder beidseitig eine metallische und/oder organische Beschichtung aufweist.

6. Verwendung nach einem der Ansprüche 1 bis 5,
**dadurch gekennzeichnet, dass** der Verbundwerkstoff kalt und warm umgeformt ist.

7. Verwendung nach einem der Ansprüche 1 bis 6,
**dadurch gekennzeichnet, dass** die Dicke der mittleren Lage höchstens 90% der Gesamtdicke des Verbundwerkstoffs beträgt.

8. Verwendung nach einem der Ansprüche 1 bis 7,
**dadurch gekennzeichnet, dass** die Dicke der mittleren Lage mindestens 30% der Gesamtdicke des Verbundwerkstoffs beträgt.

9. Verwendung nach einem der Ansprüche 1 bis 8,
**dadurch gekennzeichnet**, da s s die Gesamtdicke des Verbundwerkstoffs höchstens 10,0 mm beträgt, vorzugsweise im Bereich von 0,5 mm bis 4,0 mm liegt.

10. Verwendung nach einem der Ansprüche 1 bis 9,
**dadurch gekennzeichnet, dass** die Dicken von wenigstens zwei Lagen, insbesondere den äußeren Lagen übereinstimmen.

11. Verwendung nach einem der Ansprüche 1 bis 10,
**dadurch gekennzeichnet, dass** die Verwendung für eine B-Säule, Strukturbauteile im Kraftfluss, Knotenbleche, Sitzschienen, Schlösser, Scharniere, Führungen, korrosionsgefährdete Bauteile mit hohen Festigkeitsanforderungen wie Fahrwerke, Tanks, Crashboxen, Längsträger, Bremsscheiben oder Kupplungen erfolgt.

## Claims

1. Use of a coilable multi-layer metallic composite material produced by means of roll-cladding in a motor vehicle structure, in particular a bodywork structure, **characterised in that**
the composite material is a lightweight composite material and comprises three layers made of a steel alloy, wherein at least one of the layers is formed from a high-strength or very high-strength steel alloy, which has a yield strength of more than 300 MPa and an elongation at break A₈₀ of less than 35%, and the composite material is hot-formed.

2. Use according to Claim 1,
**characterised in that**
the middle layer is formed from a soft, easily-deformable steel alloy, which has a yield strength of less than 300 MPa and an elongation at break A₈₀ of more than 20%, and at least one of the outer layers is formed from a high-strength or very high-strength steel alloy, which has a yield strength of more than 300 MPa and an elongation at break A₈₀ of less than 35%.

3. Use according to Claim 1 or 2,
**characterised in that**
all three layers are formed from steel alloys which differ from one another.

4. Use according to Claim 1 or 2,
**characterised in that**
the two outer layers consist of the same high-strength or very high-strength steel alloy.

5. Use according to one of Claims 1 to 4,
**characterised in that**
the composite material has on one side or both sides a metallic and/or organic coating.

6. Use according to one of Claims 1 to 5,
**characterised in that**
the composite material is cold-formed and/or hot-formed.

7. Use according to one of Claims 1 to 6,
**characterised in that**
the thickness of the middle layer amounts to a maximum of 90% of the total thickness of the composite material.

8. Use according to one of Claims 1 to 7,
**characterised in that**
the thickness of the middle layer amounts to at least 30% of the total thickness of the composite material.

9. Use according to one of Claims 1 to 8,
**characterised in that**
the total thickness of the composite material is at most 10.0 mm, preferably in the range from 0.5 mm to 4.0 mm.

10. Use according to one of Claims 1 to 9,
**characterised in that**
the thicknesses of at least two layers, in particular of the two outer layers, agree.

11. Use according to one of Claims 1 to 10,
**characterised in that**
the use is for a B-column, structural components in the force flow, gusset plates, seat rails, locks, hinges, guide elements, components subject to the risk of corrosion with high strength requirements, such as chassis elements, tanks, crash boxes, frame side members, brake disks, or clutches.

## Revendications

1. Utilisation d'un matériau composite multicouche métallique embobinable fabriqué par plaquage par laminage dans une structure de véhicule, en particulier une structure de carrosserie,
**caractérisée en ce que** le matériau composite est un matériau composite à structure légère et présente trois couches d'acier allié, au moins une des couches étant fabriquée dans un acier allié à haute résistance ou très haute résistance qui présente une limite élastique de plus de 300 MPa et un allongement à la rupture A₈₀ de moins de 35 %, et que le matériau composite est déformé à chaud.

2. Utilisation selon la revendication 1,
**caractérisée en ce que** la couche médiane présente un acier allié malléable facilement déformable qui a une limite élastique de moins de 300 MPa et un allongement à la rupture A₈₀ de plus de 20 % et qu'au moins une des couches extérieures est fabriquée dans un acier allié à haute résistance ou très haute résistance qui présente une limite élastique de plus de 300 MPa et un allongement à la rupture A₈₀ de moins de 35 %.

3. Utilisation selon la revendication 1 ou 2,
**caractérisée en ce que** les trois couches sont fabriquées dans des aciers alliés différents les uns des autres.

4. Utilisation selon la revendication 1 ou 2,
**caractérisée en ce que** les deux couches extérieures sont composées du même acier allié à haute résistance ou très haute résistance.

5. Utilisation selon une des revendications 1 à 4,
**caractérisée en ce que** le matériau composite présente un revêtement métallique et/ou organique sur un côté ou les deux côtés.

6. Utilisation selon une des revendications 1 à 5,
**caractérisée en ce que** le matériau composite est déformé à froid et à chaud.

7. Utilisation selon une des revendications 1 à 6,
**caractérisée en ce que** l'épaisseur de la couche médiane représente au plus 90 % de l'épaisseur totale du matériau composite.

8. Utilisation selon une des revendications 1 à 7,
**caractérisée en ce que** l'épaisseur de la couche médiane représente au moins 30 % de l'épaisseur totale du matériau composite.

9. Utilisation selon une des revendications 1 à 8,
**caractérisée en ce que** l'épaisseur totale du matériau composite est au maximum de 10,0 mm, de préférence de 0,5 mm à 4,0 mm.

10. Utilisation selon une des revendications 1 à 9,
**caractérisée en ce que** les épaisseurs d'au moins deux couches, en particulier les couches extérieures, coïncident.

11. Utilisation selon une des revendications 1 à 10,
**caractérisée en ce que** l'utilisation a lieu pour une colonne B, des composantes structurelles du flux de force, des goussets, rails de sièges, serrures, charnières, guides, composantes sujettes à corrosion soumises à de fortes exigences de solidité comme les trains de roulement, réservoirs, crash boxes, longerons, disques de freins ou embrayages.
